# EUROPEAN PATENT APPLICATION

(11) **EP 2 688 014 A1**
(43) Date of publication of application: **22.01.2014**
(21) Application number: 13176368.2
(22) Date of filing: 12.07.2013
(51) Int. Cl.: G06Q 10/00

(54) **Method and Apparatus for Recommending Texts**

(30) Priority: 17.07.2012 KR 20120077667
(71) Applicant: Samsung Electronics Co., Ltd, Gyeonggi-do 443-742 (KR)
(72) Inventor: Min, Sunyoung, 443-742 Gyeonggi-do (KR)
(74) Representative: Gover, Richard Paul

(57) **Abstract**

A text recommendation for offering a next text recommendations that may be entered by a user is performed by executing a communication application; collecting context information associated with the communication application; predicting a user's intention by analyzing the context information; retrieving recommended texts corresponding to the user's intention; and displaying the recommended texts.

## Description

### BACKGROUND OF THE INVENTION

### Field of the Invention

The present disclosure relates to a method and apparatus for offering text recommendations using a device equipped with a display unit and an input unit.

### Description of the Related Art

Recent mobile terminals provide a multifunction and various features including phonebook, game, short message, email, morning call, music player, schedule organizer, digital camera, wireless Internet access, etc.

The mobile terminal is provided with at least one input devices such as touchscreen as input interface for interaction with the user. The user enters text messages by manipulation the touchscreen. Typically, the mobile terminal is provided with auto-text connection function for correcting spelling and spacing errors, Also, the mobile terminal is also provided with a word recommendation function which identifies the characters input by the user and offers a choice of words that may be selected by the user in attempt to speed up the typing process. However, the conventional word recommendation function has a drawback in that the recommendation is limited. For example, if words "pro" is inputted by the user, the recommended words are typically limited to "process" and "proceed". That is, the current word recommendation feature does not account for the user's intention.

Accordingly, there is therefore a need for an improved ways to recommend words and/or sentences that can facilitate the input of texts from the user's view point.

### SUMMARY OF THE INVENTION

The present invention has been made in an effort to solve the above problem and provides additional advantages, by providing a text recommendation method and apparatus capable of predicting user's intention and offers recommendations that are collected based on the predicted user's intention of the user. Further, the present invention provides a text recommendation method and apparatus capable of recognizing a need for a measurement unit conversion in the text received or to be transmitted depending on the location of a user or a particular contact party in communication with the user.

In accordance with an aspect of the present invention, a method for recommending a text transmission includes: collecting context information associated with a particular contact while a communication application is being executed; predicting user's intention by analyzing the context information; retrieving recommended texts corresponding to the user's intention; and displaying the recommended texts.

In accordance with another aspect of the present invention, a method for recommending a text transmission includes: displaying at least one of an outbound text generated for transmission to a particular contact and an inbound text received from the contact; extracting a first measurement unit from the displayed text; determining whether the first measurement unit has to be converted; if so, converting the first measurement unit to a second measurement unit; and adding the converted second measurement unit to the corresponding text or replacing the first measurement unit with the converted second measurement unit.

In accordance with another aspect of the present invention, an apparatus for recommending a text transmission includes: a touchscreen; a memory; and a control unit controlling the touchscreen, and the memory, for collecting context information associated with a particular contact while during a communication mode, predicting user's intention by analyzing the context information, retrieving recommended texts corresponding to the user's intention, and displaying the recommended texts on the touchscreen.

In accordance with still another aspect of the present invention, an apparatus for recommending a text transmission includes: a touchscreen; a storage unit; and a control unit controlling the touchscreen and the storage unit for displaying at least one of an outbound text generated for transmission to a particular contact and an inbound text received from the contact on the touchscreen, extracting a first measurement a unit from the displayed text, determining whether the first measurement unit has to be converted, if so, converting the first measurement unit to a second measurement unit and adding the converted second measurement unit to the corresponding text or replacing the first measurement unit with the converted second measurement unit.

### BRIEF DESCRIPTION OF THE DRAWINGS

FIG. 1 is a block diagram illustrating the configuration of the text recommendation apparatus according to an embodiment of the present invention;
FIG. 2 is a flowchart illustrating the text recommendation method according to an embodiment of the present invention;
FIGs. 3, 4, 5, 6, 7 and 8 are diagrams illustrating exemplary screen images for explaining word recommendation process in the text recommendation method according to an embodiment of the present invention;
FIG. 9 is a flowchart illustrating the unit conversion procedure of the text recommendation method according to an embodiment of the present invention;
FIG. 10 is a diagram illustrating an exemplary screen image for explaining the unit conversion in the unit conversion procedure of FIG. 9;
FIG. 11 is a flowchart illustrating the text recommendation method according to another embodiment of the present invention; and
FIGs. 12, 13 and 14 are diagrams illustrating exemplary screen images for explaining the text recommendation method of FIG. 11.

### DETAILED DESCRIPTION OF EXEMPLARY EMBODIMENTS

A description is made of the technical features of the present invention hereinafter with reference to accompanying drawings. For the purpose of clarity and simplicity, detailed description of well-known functions and structures incorporated herein may be omitted to avoid obscuring the subject matter of the present invention. The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents. In the drawings, certain elements may be exaggerated or omitted or schematically depicted for clarity of the invention, and the actual sizes of the elements are not reflected. Thus, the present invention is not limited in the relative sizes of the elements and distances therebetween.

The text recommendation method and apparatus of the present invention is applicable to various types of multimedia devices including smartphone, tablet PC, laptop PC, desktop PC, TV, navigation device, video phone, etc. The text recommendation method and apparatus of the present invention is also applicable to multimedia-enabled devices (e.g. communication function-enabled and touchscreen-enabled refrigerator.

In the following description, the term 'context information' denotes the data necessary for predicting the user's intention, e.g. terminal's surrounding environment, caller information, recipient information, reception document, transmission document, inbound message, outbound message, chat content with counterpart, etc. The terminal's surrounding environment may include location, weather, time, date, day of the week, language, units, and country, etc. Here, the units may include time zone, currency, length, velocity, weight, distance, volume, temperature.

Briefly, the apparatus and method according to the present invention collects, when a communication application (e.g. chatting application) is executed, the context information, then predicts the user's intention by analyzing the collected context information, and collects texts corresponding to the user's intention from its own memory containing the past correspondence pattern, for example, or from an external source (e.g. collecting current stock information from a server), and recommends the collected information to the user in form of text.

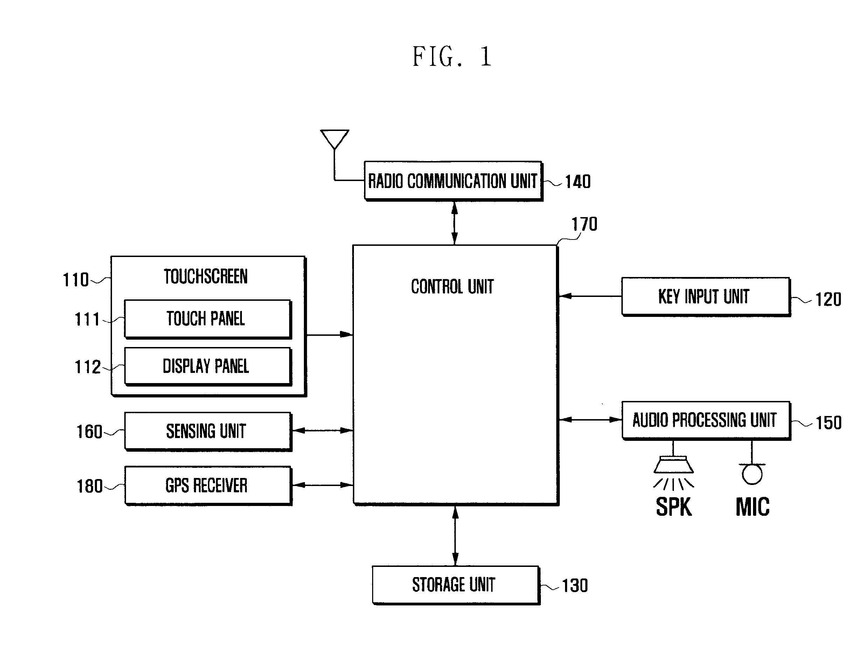

FIG. 1 is a block diagram illustrating the configuration of the text recommendation apparatus according to an embodiment of the present invention.

Referring to FIG. 1, the apparatus 100 may include a touchscreen 110, a key input unit 120, a storage unit 130, a radio communication unit 140, an audio processing unit 150, a speaker (SPK), a microphone (MIC), a sensing unit 160, a control unit 170, a GPS receiver 180.

The touchscreen 110 provides a user interface for interaction with the user and may include a touch panel 111 and a display panel 112. The touch panel 111 can be placed on the display panel 112. In detail, the touch panel 111 can be implemented in add-on type on the display panel or on-cell type or in-cell type in the display panel 112.

The touch panel 111 generates an analog signal (e.g. touch event) in response to a user's touch gesture on the touch panel 111 and performs Analog/Digital (A/D) conversion on the analog signal to generate a digital signal to the control unit 170. The control unit 170 detects the user's touch gesture based on the received digital signals representative of the touch event. The control unit 170 is capable of extracting touch position, movement speed, direction and amount of touch, and touch pressure, etc. for controlling the components based the detected touch input.

The touch panel 111 can be implemented as a combined touch panel including a finger touch panel for detecting a gesture made by a human body portion, such as a fingertip, and a pen touch panel for detecting pen gesture made by a touch pen. Here, the finger touch panel can be implemented as a capacitive type panel capable of detecting the touch gesture made by a certain object (e.g. conductive material capable of changing electrostatic capacity) as well as human body parts. That is, the finger touch panel is capable of generating a touch event in response to the finger gesture or a gesture made with a conductive object. The finger touch panel is also capable of being implemented with a resistive type or Infrared type panel as well as the capacitive type panel. The pen touch panel can be implemented with an electromagnetic induction type panel. In this case, the pen touch panel generates a touch event in response to the gesture made by the touch stylus pen configured to generate a magnetic field.

The user's touch gesture can be classified into one of a finger gesture and a pen gesture according to the means used for making the gesture on the touchscreen 110. Further, the finger touch gesture is detected by the finger touch panel 111a, and the pen touch gesture is detected by the pen touch panel 111b. Alternatively, the user's gesture also can be classified into one of touch and touch gesture regardless of the touch means (e.g. finger and stylus pen).

The touch gestures include tap, double tap, long tap, drag, drag & drop, flick, press, etc. Here, 'touch' is a user's gesture of contacting a position on the screen with a touch means (e.g. finger and stylus pen), 'tap' is a user's gesture of contacting a position on the screen with a touch means and releasing the contact (touch-off) without moving the touch means, 'double tap' is a user's gesture of making the tap twice, 'long tap' is a user's gesture of maintaining the contact for a long time as compared to the tab and then releasing the contact, 'drag' is a user's gesture of contacting a position and moving the contact on the screen in a certain direction, 'drag and drop' is a user's gesture of making the drag gesture and then release the contact of the touch means, 'flick' is a user's gesture of snapping on the screen quickly as compared to the drag gesture, and 'press' is a user's gesture of contacting at a certain position on the screen and applying press. That is, 'touch' denotes the state of maintaining a contact on the screen, and 'touch gesture' denotes the behavior of making the contact (touch-on) and then releasing the contact (touch-off). The touch panel 111 is capable of including a pressure sensor for detecting the pressure applied at the touched position. The detected pressure information is transferred to the control unit 170, and the control unit 170 discriminates between touch and press based on the pressure information.

The touch panel 112 converts the video data input by the control unit 170 to analog signal to display an image under the control of the control unit 170. That is, the display panel 112 is capable of displaying diverse screens associated with the use of the phonebook provision apparatus, such as lock screen, home screen, application execution screen, and keypad. The lock screen indicates the screen image displayed when the display panel 112 powers on. If a user's gesture for unlocking the screen, the control unit 170 is capable of changing the lock screen for the home screen or an application execution screen. The home screen indicates the screen image including plural icons corresponding to the respective applications.

If one of the application icons is selected (e.g. tapped) by the user, the control unit 170 executes the corresponding application (e.g. Internet browser, document, chatting, or texting application) and displays the corresponding execution screen on the display panel 112. The display panel 112 is capable of displaying one of the screens on the background and another on the foreground as being overlapped on the background. For example, the display panel 112 is capable of displaying the application execution screen with a keypad overlapped thereon.

For example, the display panel 112 is capable of displaying the keypad in a first screen area, at least one text recommendation in a second screen area, and the text input by means of the keypad and a text recommendation selected from the second screen area in a third screen area.

The display panel 112 can be implemented with one of the Liquid Crystal Display (LCD), Organic Light Emitted Diode (OLED), and Active Matrix OLED (AMOLED).

The key input unit 120 is provided with a plurality of keys for receiving alphanumeric information and configuring various functions. The function keys may include menu keys, screen on/off key, power on/off key, and volume control key, etc. The key input unit 120 is capable of generating a key event to the control unit 170 in association with user setting and function control of the apparatus 100. The key events may include power on/off event, volume control event, screen on/off event, etc. The control unit 170 controls the components in response to these key events. The keys of the key input unit 120 are referred to as hard keys while the keys provided on the touchscreen 110 are referred to as soft keys.

The storage unit 130 is capable of storing the data generated in the apparatus 100 (e.g. text message, shot picture, and schedule information) and/or the data received from outside through the radio communication unit 140 (e.g. text message and email). The storage unit 130 is also capable of storing the lock screen, home screen, the keypad, etc. the storage unit 130 is also capable of storing various settings associated with the operations of the apparatus 100 (e.g. screen brightness, touch-reactive vibration, screen rotation, background image, etc.).

The storage unit 130 is capable of storing Operating System (OS) for booting up the apparatus 100, communication program, image processing program, display control program, user interface program, embedded applications, and third party applications.

The communication program includes commands for communication with an external apparatus by means of the radio communication unit 140. The graphic processing program includes various software components, such as image format conversion, graphics size adjustment, rendering, and display panel's backlight luminance determination modules. Here, the graphics may include text, webpage, icon, picture, motion picture, and animation. The graphics processing program may include a software codec. The user interface program may include various software components associated with the user interface.

The voice recognition program is capable of extracting voice property information (e.g. voice tone, frequency, decibel, etc.) from the voice data. The voice recognition program is capable of comparing the detected voice feature information with one or more previously stored voice feature information and recognizes the user based on the comparison result. The voice recognition program can be provided with Speech To Text (STT) function for converting voice data to text.

The artificial intelligence program is capable of predicting the user's intention based on the context information explained hereinafter. In detail, the artificial intelligence program is capable of including a natural language processing engine for recognizing and processing context data such as documents, messages, and chat content, and an inference engine for inferring user's intention based on the recognized context. The inference engine is capable of including a user's intention prediction table mapping the texts and user's intentions as shown in table 1. Referring to table 1, if a preceding word, e.g. 'dear', is input, the inference engine predicts the next word to be input by the user as 'recipient name'. Table 1 is just an exemplary prediction table, and the prediction table can be implemented with more mapping elements.

**Table 1**

| Preceding word or sentence | User's intention |
|---|---|
| Dear | User may enter recipient-related information (e.g. name, Sir after 'Dear' |
| Nasdaq | User may enter current stock price or ups and down after 'Nasdaq' |
| Today is | User may enter day of week, date, or weather after 'Today is' |
| Conference call on 18th at | User may enter time after 'at' |
| Where are you?(chat of counterpart) | User may notify counterpart of current position |
| Who are you?( chat of counterpart) | User may notify counterpart of user name |
| Good | User may enter one of the words, 'morning', 'afternoon' an 'evening' |

The embedded applications are the applications installed in the apparatus and may include browser, email, instant messenger, stock application providing current stock market (e.g. Nasdaq) information, map application providing a current location of the apparatus 100 through interoperation with the GPS receiver 180, weather application providing weather information at the current location of the apparatus 100 through interoperation with the GPS receiver, etc. The third party applications are diverse applications that can be downloaded from the online market and installed in the terminal. The third party applications can be installed and uninstalled freely.

The radio communication unit 140 is responsible for voice, video, and data communication under the control of the control unit 170. For this purpose, the radio communication unit 140 is capable of including a Radio Frequency (RF) transmitter for up-converting and amplifying signals to be transmitted and an RF receiver for low noise amplifying and down-converting the received signal. The radio communication unit 140 is capable of includes at least one of cellular communication module (3rd Generation (3G) cellular communication module, 3.5G cellular communication module, 4G cellular communication module, etc.), digital broadcast module (e.g. DMB module), and short range communication module (e.g. Wi-Fi module and Bluetooth module).

The audio processing unit 150 is connected with the speaker (SPK) and the microphone (MIC) and processes audio input and output for supporting voice recognition, voice recording, digital recording, and telephony functions. The audio processing unit 150 receives the audio data output from the control unit 170, converts the audio data to an analog signal, and outputs the analog signal through the speaker (SPK). The audio processing unit 150 receives the analog signal input through the microphone, converts the analog signal to audio data, and transfers the audio data to the control unit 170. The speaker (SPK) converts the analog signal from the audio processing unit 150 to output an audible sound wave. The microphone (MIC) converts the voice and other sound waves to an analog signal.

The sensing unit 160 detects at least one of condition changes such as slop change, luminance change, and acceleration change and notifies the control unit 170 of the detection result. The sensing unit 160 may include various sensors capable of being powered and sensing state change of the apparatus 100 under the control of the control unit 170. The sensing unit 160 is capable of implemented as a chip integrating the sensors or as individual chips corresponding to the sensors. In detail, the sensing unit 160 is capable of including an acceleration sensor. The acceleration sensor is capable of measuring acceleration of X, Y, and Z axis components. The acceleration sensor may include a gyro sensor to measure the gravity acceleration when the apparatus 100 is not moving. For example, when the touchscreen 110 placed on a XY plane faces upward, the X and Y axis components of the gravity acceleration detected by the sensing unit 160 is 0m/sec2 while Z axis component may be 9.8m/sec2. In the case that the touch screen 110 faces download, the X and Y axis components is 0m/sec2 while Z axis component may be 9.8m/sec2. When the apparatus 100 is moving, the acceleration sensor detects the acceleration as combination of the motion acceleration and gravity acceleration.

The control unit 170 controls the overall operations of the apparatus 100 and signal flows among the internal component of the apparatus and processes data. The control unit 170 controls power supply from the battery to the internal components. The control unit 170 collects and analyzes the context information (e.g. context recognition) to predict the user's intention, retrieves the texts corresponding to the user's intention from inside/output of the apparatus 100 (e.g. current stock price information), and offers the retrieved texts as recommendations to the user. Here, the texts corresponding to the user's intention can be retrieved from the phonebook and emails stored in the storage unit 130. The texts also can be retrieved from an external apparatuses by means of applications installed in the apparatus 100. The analysis and prediction can be performed by an external server instead of the apparatus 100, i.e. the control unit 170. That is, the radio communication unit 140 is capable of transmitting to the server an analysis/prediction request message including the context information generated by the controller 170. The corresponding server is capable of analyzing the context information to predict the user's intention and sending the apparatus 100 a response message including the analysis result. The control unit 170 is also capable of performing language translation and unit conversion. For language translation, translation and dictionary programs may be stored in the storage unit 130 of the apparatus 100. The control unit 170 is capable of performing unit conversion on a unit-related part (e.g. 10 mile) of the text and displaying the conversion result on the touchscreen 110.

The control unit 170 may include a Central Processing Unit (CPU) and a Graphic Processing Unit (GPU). As well-known in the art, the CPU is the main control unit of a computer system which performs data operation and comparison and command interpretation and execution. The GPU is the graphic control unit of performing graphic-related data operation and comparison and command interpretation and execution. Each of CPU and GPU can be integrated into a package of a single integrated circuit including two or more independent cores (e.g. quad-core). The CPU and GPU are also can be integrated into a chip in the form of System on Chip (SoC). The CPU and GPU are also can be implemented in the form of multi-layered package. The packaged CPU and GPU may be referred to as Application Processor (AP).

The operations related to the text recommendation according to an embodiment of the present invention can be performed at least one of the cores of CPU. The graphic-related operations associated with the test recommendation can be performed by the GPU. For example, one of the GPU cores is capable of performing the recommended texts presentation. Of course, the operations related to the text recommendation can be performed by both the GPU and CPU. A description is made of the functionality of the control unit 170 in detail later. The GPS receiver 180 receives the GPS signals including transmission times transmitted by three or more GPS satellites and calculates the distances between the apparatus 100 and the respective GPS satellites based on the difference between the GPS signal transmission and reception times, acquires the location (latitude/longitude) of the apparatus 100 based on the calculated distance information, and send the location information to the control unit 170.

Although not enumerated herein, the apparatus 100 according to an embodiment of the present invention is capable of further including at least one of vibration motor, camera, hardware codec, wired communication unit for establishing connection with an external device (e.g. server, PC, etc.), etc. The apparatus 100 according to an embodiment of the present invention can be implemented with or without any of the aforementioned components depending on its implementation.

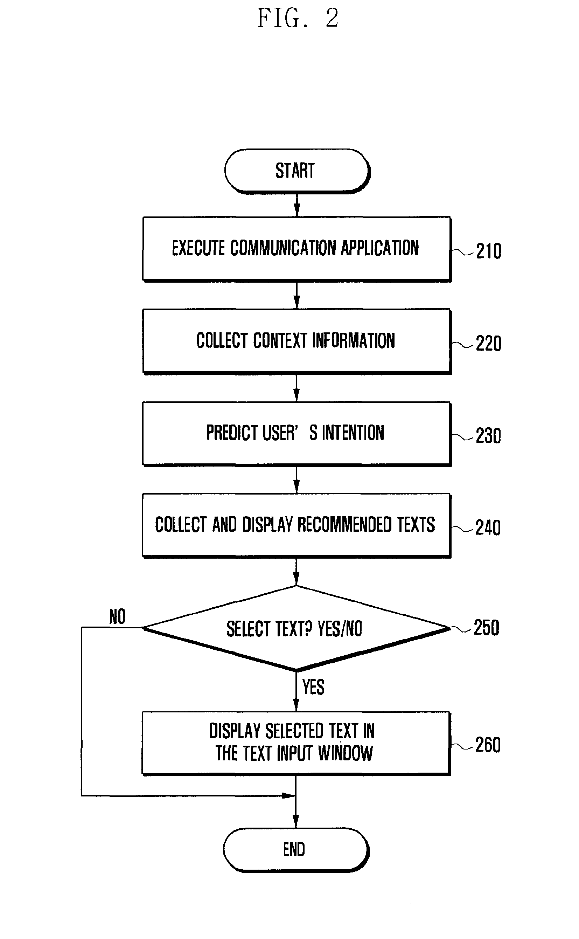

FIG. 2 is a flowchart illustrating the text recommendation method according to an embodiment of the present invention.

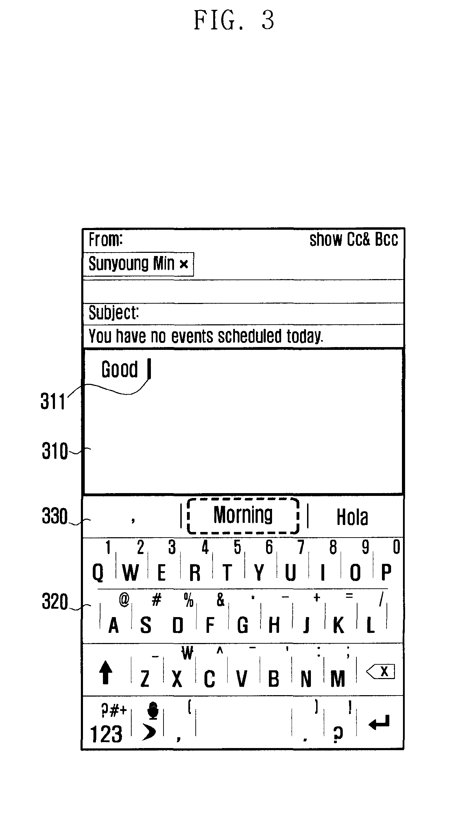

FIGs. 3 to 8 are diagrams illustrating exemplary screen images for explaining the word recommendation process in the text recommendation method according to an embodiment of the present invention.

FIG. 2 is directed to the apparatus 100 operating in the idle state. The control unit 170 controls the touchscreen 110 to display home screen including an icon representing a communication application. The communication application can be a chatting application such as Multimedia Message Service (MMS), email application for exchanging emails, Social Network Service (SNS) application, and browser application for accessing Internet blogs. The control unit 170 is capable of detecting a user input for selecting an icon (e.g. double tap on the icon) corresponding to the communication application on the touchscreen 110.

If the icon is selected, the control unit 170 executes the communication application and displays the execution screen on the touchscreen 110 at step 210. Here, the execution screen may be displayed along with most recent chat conversation with a counterpart, messages exchanged with a counterpart, inbound email, outbound email, outbox, or temporary email box. After displaying the execution screen, the control unit 170 detects a text composition request from the touchscreen 110 (e.g. tap on text input window 310 of the execution screen of FIG. 3). The control unit controls to display a keypad 320 (see FIG. 3) in response to the text composition request and presents a cursor 311 (see FIG. 3) indicating the input position in the text input window. At this time, the cursor may be blinking (i.e. appearing and disappearing alternately at a predetermined period). At this time, a key pad may be presented as overlapped on an area of the execution screen or an area separated from the execution screen.

The control unit 170 collects the context information in association with the currently running communication application at step 220. For example, the control unit 170 is capable of collecting the outbound/inbound texts, message, emails, voice text, etc. transmitted/received to or from a particular contact or counterpart. Particularly, the control unit 170 is capable of collecting the preceding word or sentence entered before the cursor in the outbound text. The control unit 170 is also capable of collecting the text received most recently from the counterpart, e.g. counterpart's most recent chatting text, message, email, etc. The control unit 170 is also capable of collecting the ambient environmental information such as location, weather, time, date, day of week, language, unit, country, etc. Here, the location information can be acquired with GPS receiver 180. The language and country information can be the language and country information of the current settings of the apparatus 100. The time, date, and day of week can be the current time, date, and day of week at the current location of the apparatus 100. The units of currency, length, velocity, and weight per country can be store in the storage unit 130. In alternate embodiment, the collected measurement unit information, such a metric system unit, can be the unit information available at the current location of the apparatus 100.

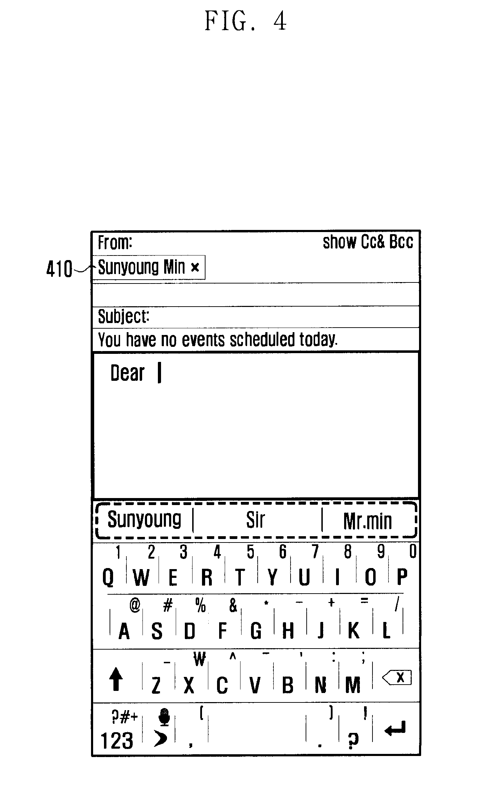

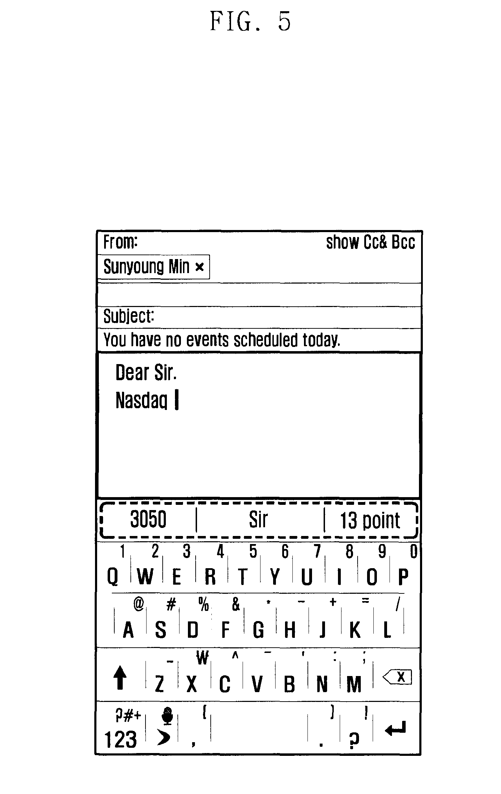

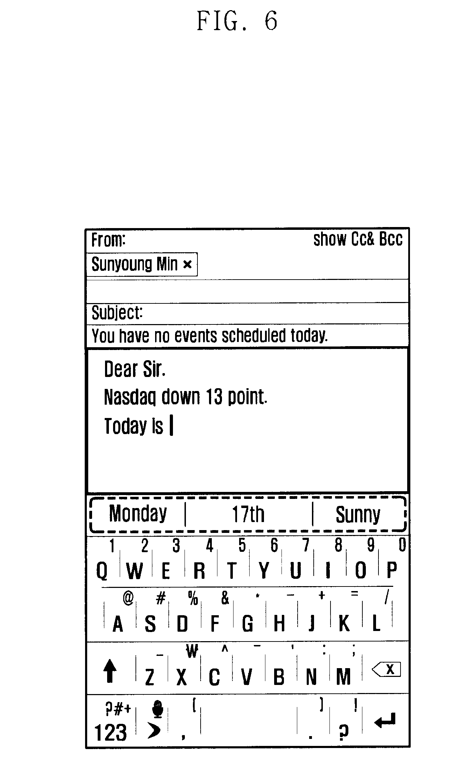

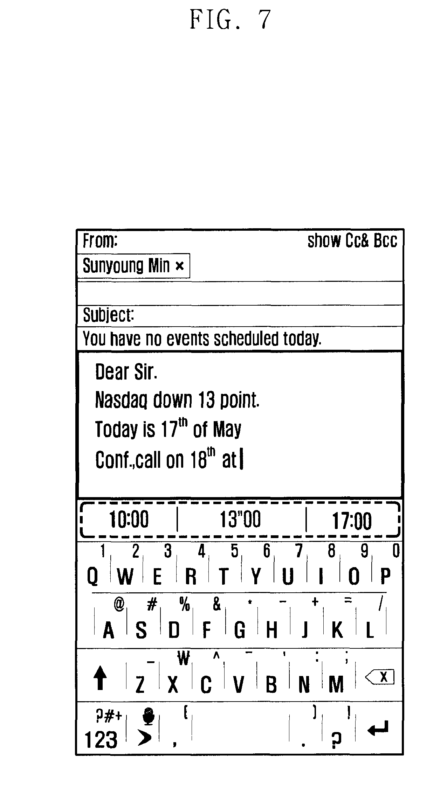

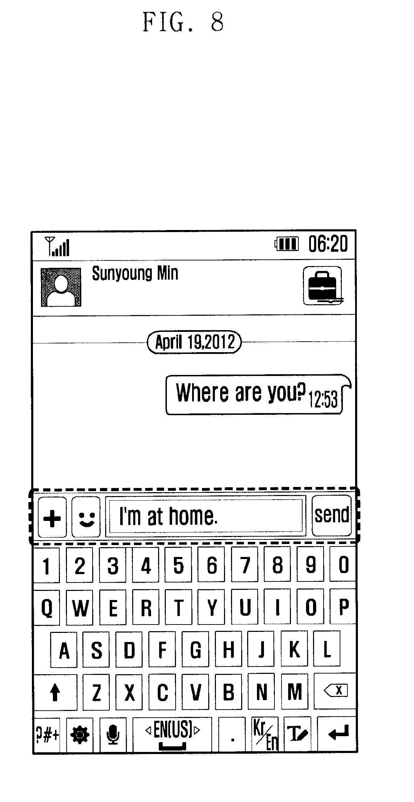

The control unit 170 analyzes the collected context information to predict the user's intention at step 230. The control unit 170 recognizes the context of the collected text and predicts the user's intention (next text to be input by the user) based on the recognized context. For example, if the word 'Good' is entered right before the cursor, the control unit 170 predicts inputting any of the words Morning, Afternoon, and Evening as the user's intention referring to the Table 1 (see FIG. 3). For another example, if the word 'Dear' is entered right before the cursor, the control unit 170 predicts inputting any of the recipient name, sir, Mr. (family name) as the user's intention referring to the Table 1 (see FIG. 4). For another example, if the word 'Nasdaq' precedes the cursor, the control unit 170 predicts inputting the stock price information related to Nasdaq is the user's intention referring to the Table 1 (see FIG. 5). If the phrase 'Today is' precedes the cursor, the control unit 170 predicts inputting the word of 'day of the week', date, or weather as the user's intention (see FIG. 6). If the phrase 'Conference call on 18th at' precedes the cursor, the control unit 170 predicts inputting the time for promising the conference call as the user's intention (see FIG. 7). If the sentence entered most recently by the counterpart is 'Where are you?', the control unit 170 predicts inputting 'current location of the user' is the user's intention (see FIG. 8).

As described above, the control unit collects the text recommendations corresponding to the predicted user's intention and controls the touchscreen 110 to display the text recommendations at step 240. The touchscreen 110 displays the text recommendations in the text recommendation display window 330 (see FIG. 3) under the control of the control unit 170. For example, if the user's intention is to input a recipient name, the control unit 170 presents the recipient name in the recipient name box 410 (see FIG. 4). The control unit 170 also recognizes the context of the conversation exchanged with the recipient through past emails to check the relationship between the recipient and the user. For example, when a past email transmitted to the recipient includes the word 'Sir', the control unit 170 may determine that the recipient is a superior of the user. If it is determined that the recipient is a superior of the user, the control unit 170 may recommend the word 'Sir'. For another example, if it is determined that the user's intention is to input the stock price information related to Nasdaq, the control unit 170 collects the stock information (e.g. current stock price and ups and downs). At this time, a certain stock market application is running to retrieve the stock information. Thus, the stock market information can be stored in the apparatus 100 (i.e. storage unit 130) in real time. In this case, the control unit is 170 is capable of collecting the stock information from the apparatus 100 (i.e. storage unit 130). That is, the control unit 170 is capable of collecting the stock information by executing a certain stock market application. Alternatively, the control unit 170 is capable of accessing an external device (e.g. web server) to acquire the intended information. For another example, the control unit 170 is capable of collecting day of the week, date, and weather information depending on the user's intention. At this time, the weather application may be running currently, and the weather information can be stored in the apparatus 100 (e.g. storage unit 130) in real time. Further, if it is determined that the user's intention is to make a conference call, the control unit 170 checks the time with no schedule between 10 AM and 6PM from the schedule information. To this end, the control unit 170 checks the schedule information on 18th and, if there is no spare time between 11 and 13 o'clock and between 15 and 17 o'clock, collects 10, 13, and 17 o'clock as spare times. The control unit 170 is also capable of collecting the information related to the current location of the user (e.g. user's home) using the GPS feature.

The control unit 170 determines whether the user selects any of the recommended texts at step 250. If a user input for selecting one of the recommended texts on the touchscreen 110, the control unit controls such that the selected text is entered after the preceding word in the text input window at step 260. That is, the control unit 170 enters the selected text into the outbound text.

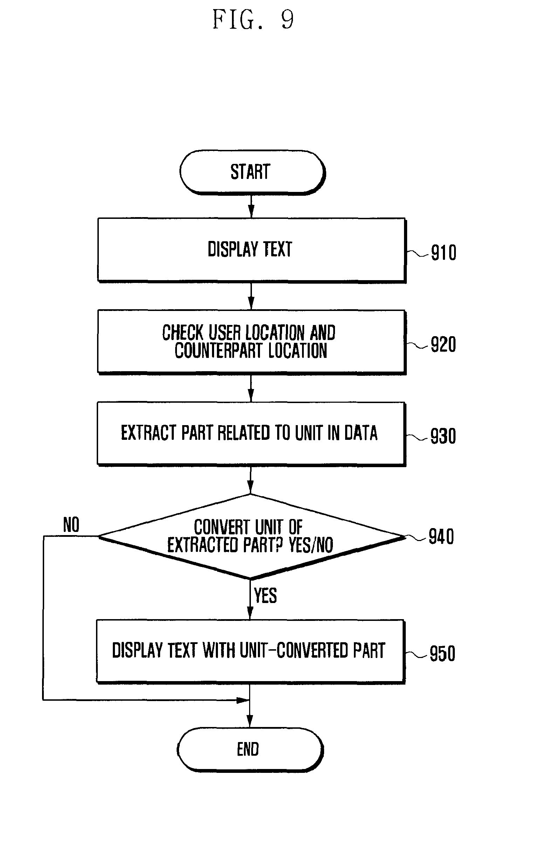

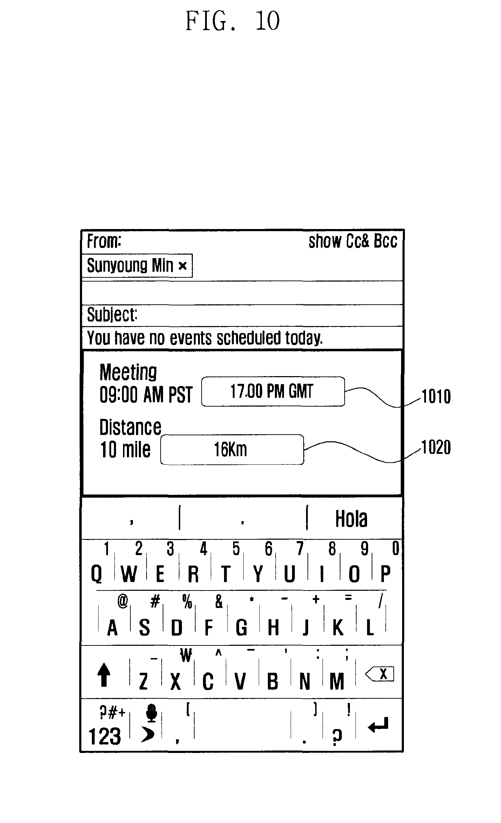

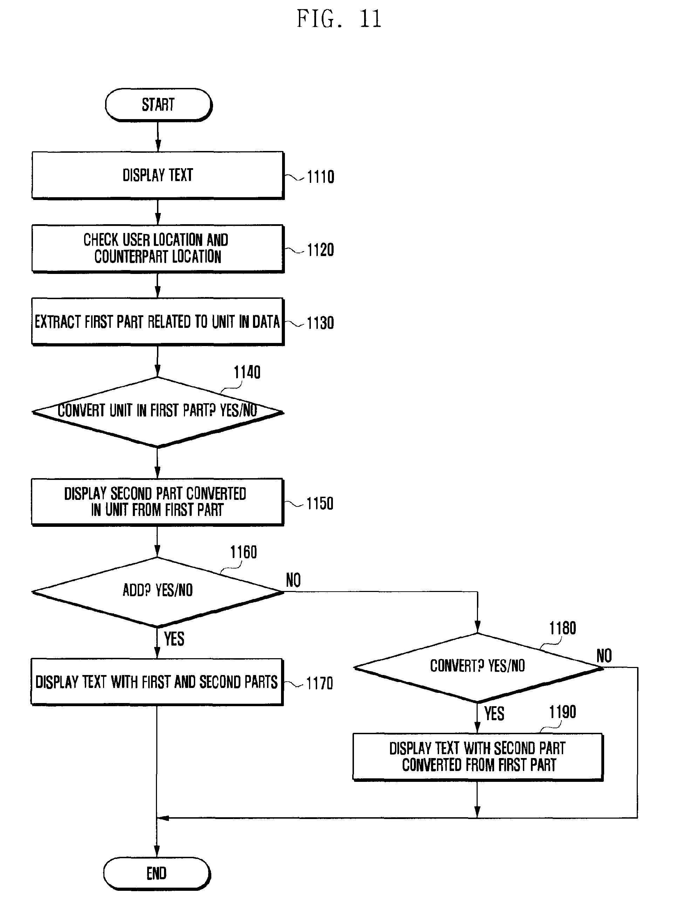

FIG. 9 is a flowchart illustrating the unit conversion procedure of the text recommendation method according to another embodiment of the present invention. That is, the collection of location information described earlier can be used to further provide other convenient features shown in FIGs. 9 and 11. FIG. 10 is a diagram illustrating an exemplary screen image for explaining the unit conversion in the unit conversion procedure of FIG. 9.

Referring to FIG. 9, the touch screen 10 displays text(s) under the control of the control unit 170 at step 910. Here, the text can be of message, document, email, etc. The text also may be of the message to be transmitted or received from a counterpart.

The control unit 170 is capable of checking the user's location based on the location information received by the GPS receiver 180, base station identification (ID) from which the radio communication unit 140 receives signals, and/or IP address of the Wi-Fi Access Point (AP) at step 920. The control unit 170 is also capable of checking the counterpart's location based on the address information included in the inbound text and the address information related to the counterpart registered with the phonebook at step 930. The user location checking process of step 920 can be performed prior to step 910. In the case that only the inbound text is displayed, the control unit 170 may check the user's location but not the counterpart's. In the case that only the outbound text is displayed, the control unit 170 may check only the counterpart's location but not the user's.

The control unit 170 recognizes the context of the text and extracts a part related to a certain unit from the text at step 930. In the exemplary case of FIG. 10, the text includes the unit-related parts of "09:00 AM PST" and "10 miles".

The control unit 170 determines whether to convert the unit of the extracted part based on the checked location at step 940. In detail, if the part related to a certain unit is extracted from an outbound text, the control unit 170 determines whether the unit of the extracted part matches the unit used in the area where the counterpart is located. For example, if the unit of the extracted part is 'Pacific Standard Time (PST)' but the counterpart's location is in the area using 'Greenwich Mean Time (GMT), the control unit 170 determines to convert the unit. If the part related to a certain unit is extracted from an inbound text, the control unit determines whether the unit of the extracted part matches the unit used in the area where the user is located. For example, if the unit-related part includes the unit of 'mile' but the user's location is in the area using the unit of 'km', the control unit determines to convert the unit.

If it is determined to covert the unit, the control unit 170 converts the unit of the extracted part and displays the translated information with the converted unit at step 950. In the exemplary case of FIG. 10, the touch screen displays the text along with the translated information with the converted unit under the control of the control unit 170 as denoted by reference numbers 1010 and 1020. The control unit 170 is also capable of controlling the audio unit 150 to output the translated information with the converted unit in voice.

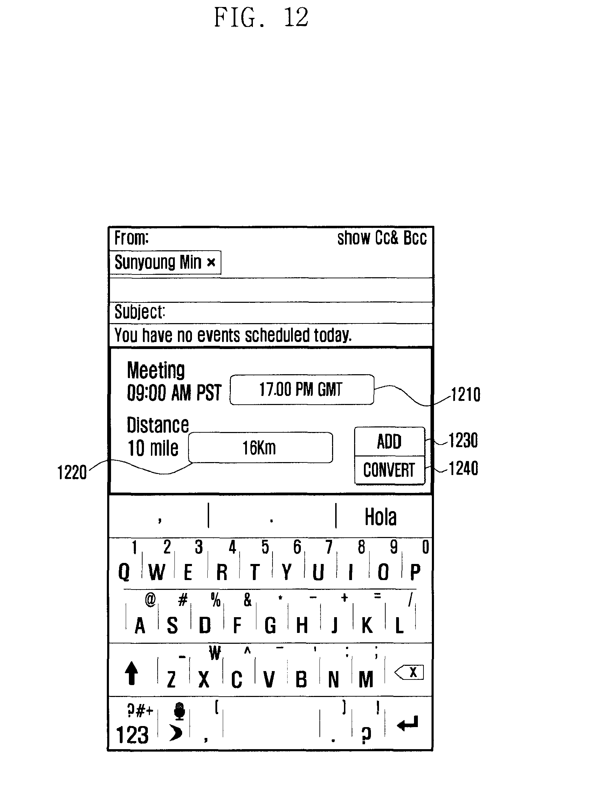

FIG. 11 is a flowchart illustrating the text recommendation method according to another embodiment of the present invention. FIGs. 12 to 14 are diagrams illustrating exemplary screen images for explaining the text recommendation method of FIG. 11.

Referring to FIG. 11, the touch screen 110 displays a text under the control of the control unit 170 at step 1110. Here, the text can be any of a message, a document, and an email; and any of outbound and inbound texts.

The control unit 170 checks the locations of the user and the counterpart user at step 1120. The user location checking process of step 1120 can be performed prior to step 1110. In the case that only the inbound text is displayed, the control unit 170 may check the user's location but not the counterpart's. In the case that only the outbound text is displayed, the control unit 170 may check only the counterpart's location but not the user's.

The control unit 170 recognizes the context of the text and extracts the first part related to a certain unit in the text at step 1130. Referring to FIG. 12, the first part is "09:00 AM PST" and "10 mile".

The control unit 170 determines whether it is necessary to convert the unit of the extracted part based on the checked location at step 1140. Since the determination procedure has been described above with reference to step 940 of FIG. 9, detailed description thereon is omitted herein.

If it is determined to covert the unit, the control unit 170 converts the unit of the first part and displays the translated information with the converted unit as a second part at step 1150. In the exemplary case of FIG. 12, the touch screen displays the text along with the second part having the translated information with the converted unit under the control of the control unit 170 as denoted by reference numbers 1210 and 1220. The control unit 170 is also capable of controlling to display an "add" button 1230 for adding the second part 1210 and 1220, and a "convert" button 1240 for converting the first part to the second part 1210 and 1220.

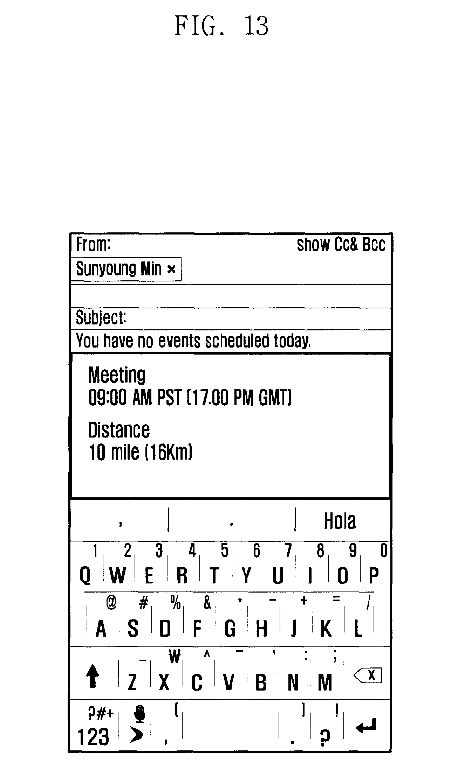

The control unit determines whether to add the second part 1210 and 1220 at step 1160. The control unit 170 is capable of detecting a user input for selecting the "add" button 1230 on the touchscreen. If the user input for selecting the "add" button 1230, the control unit 170 determines to add the second part to the text. The touchscreen 110 displays the text along with the second part under the control of the control unit 170 at step 1170 (see FIG. 13).

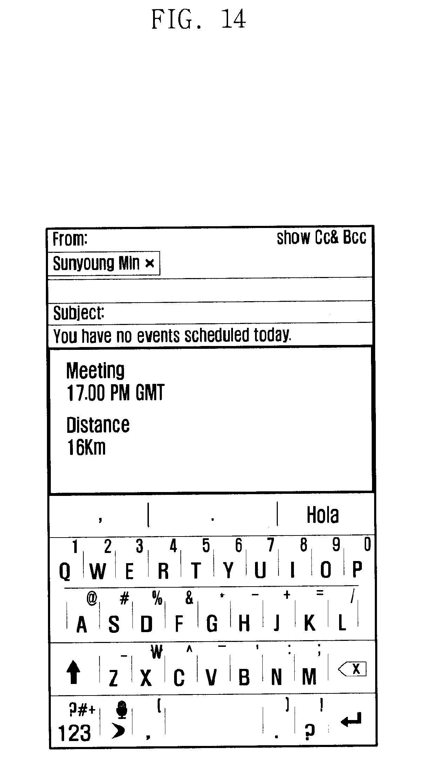

The control unit determines whether to convert the first part at step 1180. The control unit 170 is capable of detecting a user input for selecting the "convert" button 1240 on the touchscreen. If the user input for selecting the "convert" button 1240, the control unit 170 determines to convert the first part to the second part at step. The touchscreen 110 converts the first part to the second part and displays the second part in the text under the control of the controller 1190 (see FIG. 14).

As described above, the text recommendation method and apparatus of the present invention is capable of predicting user's intention and recommends texts corresponding to the user's intention, thus improving user's convenience when inputting texts. Also, the text recommendation method and apparatus of the present invention is capable of recognizing a part where unit conversion is necessary in a text and recommending appropriate unit(s) to the user, thereby resulting in improvement of user's convenience when the user is only familiar with, for example, a metric system.

The above-described embodiments of the present invention can be implemented in the form of computer-executable program commands and stored in a computer-readable storage medium. The computer readable storage medium may store the program commands, data files, and data structures in individual or combined forms. The program commands recorded in the storage medium may be designed and implemented for various exemplary embodiments of the present invention or used by those skilled in the computer software field. The computer-readable storage medium includes magnetic media such as a floppy disk and a magnetic tape, optical media including a Compact Disc (CD) ROM and a Digital Video Disc (DVD) ROM, a magneto-optical media such as a floptical disk, and the hardware device designed for storing and executing program commands such as ROM, RAM, and flash memory. The programs commands include the language code executable by computers using the interpreter as well as the machine language codes created by a compiler. The aforementioned hardware device can be implemented with one or more software modules for executing the operations of the various exemplary embodiments of the present invention.

While the invention has been shown and described with reference to certain exemplary embodiments thereof, it will be understood by those skilled in the art that various changes in form and details may be made therein without departing from the spirit and scope of the present invention as defined by the appended claims and their equivalents.

## Claims

1. A method for recommending a text transmission, the method comprising:
collecting context information associated with a particular contact while a communication application is being executed;
predicting user's intention by analyzing the context information;
retrieving recommended texts corresponding to the user's intention; and
displaying the recommended texts.

2. The method of claim 1, wherein collecting step comprises acquiring at least one of an outbound text transmitted to the contact and an inbound text received from the contact.

3. The method of claim 2, wherein predicting step comprises:
recognizing context of the outbound text or the inbound text; and
predicting the user's intention by mapping the recognized context from a previously stored prediction table.

4. The method of claim 3, wherein retrieving step comprises:
acquiring the recommended texts related to the user's intention from an internal memory storing the previously stored prediction table; and
accessing the recommended text from an exterior source when there are no recommended text from the internal memory.

5. The method of claim 4, further comprising inserting, when a user input for selecting one of the recommended texts is detected, the selected recommended text into the outbound text.

6. The method of claim 1, wherein collecting step comprises acquiring at least one of an outbound text transmitted to the contact, an inbound text received from the contact, and data related to location, weather, time, date, day of week, country, and measurement unit type where the contact is located.

7. A method for recommending a text transmission, the method comprising:
displaying at least one of an outbound text generated for transmission to a particular contact and an inbound text received from the contact;
extracting a first measurement unit from the displayed text;
determining whether the first measurement unit has to be converted;
if so, converting the first measurement unit to a second measurement unit ; and
adding the converted second measurement unit to the corresponding text or replacing the first measurement unit with the converted second measurement unit.

8. The method of claim 7, wherein determining step comprises determining whether the first measurement unit extracted from the outbound text and/or the inbound text is used at a location of the contact.

9. An apparatus for recommending a text transmission, comprising:
a touchscreen;
a memory; and
a control unit controlling the touchscreen, and the memory, for collecting context information associated with a particular contact while during a communication mode, predicting user's intention by analyzing the context information, retrieving recommended texts corresponding to the user's intention, and displaying the recommended texts on the touchscreen.

10. The apparatus of claim 9, wherein the control unit controls collecting at least one of an outbound text transmitted to the contact and an inbound text received from the contact.

11. The apparatus of claim 10, wherein the control unit controls recognizing context of the outbound text or the inbound text and predicting the user's intention by mapping the recognized context form a previously stored table stored in the memory.

12. An apparatus for recommending a text transmission, comprising:
a touchscreen;
a storage unit; and
a control unit controlling the touchscreen and the storage unit for displaying at least one of an outbound text generated for transmission to a particular contact and an inbound text received from the contact on the touchscreen, extracting a first measurement a unit from the displayed text, determining whether the first measurement unit has to be converted, if so, converting the first measurement unit to a second measurement unit and adding the converted second measurement unit to the corresponding text or replacing the first measurement unit with the converted second measurement unit.

13. The apparatus of claim 12, wherein the control unit controls determining whether the first measurement unit extracted from the outbound text and/or the inbound text is used at a location of the contact.

14. A computer-readable storage medium storing one or more programs comprising instructions which, when executed by an electronic device, cause the device to execute the method according to claim 1.

15. A computer-readable storage medium storing one or more programs comprising instructions which, when executed by an electronic device, cause the device to execute the method according to claim 7.
